# EUROPÄISCHE PATENTSCHRIFT

(11) **EP 3 379 077 B1**
(45) Veröffentlichungstag und Bekanntmachung des Hinweises auf die Patenterteilung: **30.10.2019**
(21) Anmeldenummer: 17162070.1
(22) Anmeldetag: 21.03.2017
(51) Int. Cl.: F03D 7/02, F16H 1/22, F03D 80/70, F16H 55/17

(54) **DREHVERBINDUNG EINER WINDENERGIEANLAGE UND VERZAHNUNG FÜR EINE DREHVERBINDUNG**
ROTARY JOINT OF A WIND POWER PLANT AND TOOTHING FOR A ROTARY JOINT
LIAISON ROTATIVE D'UNE ÉOLIENNE ET PAS D'ENGRENAGE POUR UNE LIAISON ROTATIVE

(43) Veröffentlichungstag der Anmeldung: 26.09.2018
(73) Patentinhaber: Nordex Energy GmbH, 22419 Hamburg (DE)
(72) Erfinder: Muhamad, Ibrahim, 18057 Rostock (DE); Manteuffel, Christine, 19069 Lübstorf (DE)
(74) Vertreter: Garrels, Sabine

(56) Entgegenhaltungen:
- WO-A1-2013/071936
- WO-A1-2013/076754
- DE-A1- 4 308 914
- US-A1- 2015 003 986

## Beschreibung

Die Erfindung betrifft eine Drehverbindung einer Windenergieanlage und eine Verzahnung für eine Drehverbindung.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt. In Windenergieanlagen werden zum Drehen unterschiedlicher Komponenten unterschiedliche Verstelleinrichtungen eingesetzt. Beispielsweise wird ein Pitchsystem für die Winkeleinstellung (Pitchwinkel) der Rotorblätter der Anlage benötigt oder ein Azimutsystem für die Drehung der Gondel der Windenergieanlage nach dem Wind. Für die Einstellung des Blattwinkels (Pitchwinkels) werden die Rotorblätter um ihre Längsachse gedreht. Die Rotorblattverstelleinrichtung (Pitchsystem) ist üblicherweise Teil einer sogenannten Blatteinstellwinkelregelung (Pitchregelung).

Das Azimutsystem ist in der Regel zwischen dem Turmkopf und der Gondel angeordnet und umfasst in einer typischen Ausführung mehrere Azimutantriebe, ein Azimutlager und optional mehrere Azimutbremskaliber. Die Komponenten des Azimutsystems können sich sowohl in der Gondel als auch im Turm befinden. Das Azimutlager besteht in der Regel aus einem Innenring und einem Außenring, wobei sowohl der Innenring als auch der Außenring eine Verzahnung aufweisen oder mit einem Zahnkranz verbunden sein können. Entweder ist der Innenring mit der Gondel verbunden und der Außenring an den Turm gekoppelt oder der Innenring ist an den Turm gekoppelt und der Außenring ist mit der Gondel verbunden. Die Azimutantriebe verfügen üblicherweise über einen Verstellantrieb, beispielsweise einen Elektromotor, ein Getriebe, typischerweise ein Planetengetriebe, ein Ritzel und optional eine Bremseinrichtung, beispielsweise eine Elektrobremse.

Üblicherweise besteht ein Pitchlager einer Rotorblattverstelleinrichtung aus einem Außenring und einem Innenring, welche drehbar zueinander gelagert sind. Der Innenring ist in der Regel mit einer Verzahnung versehen, in welche das Ritzel des Verstellantriebs eingreift. Die einzelnen Zähne der Verzahnung des Innenrings sind nur tangential mit dem Innenring verbunden. Sie sind aus dem vollen Material des Innenrings herausgearbeitet und einzeln herauskragend.

Die Verstelleinrichtungen weisen in der Regel einen oder mehrere Verstellantriebe, ein Planetengetriebe, einen Motor, beispielsweise einen Elektromotor, ein Ritzel und optional eine Bremseinrichtung, beispielsweise eine Elektrobremse auf. Die Drehmomente und Drehzahlen werden in den Getrieben über Verzahnungen über- oder untersetzt.

Die Verstelleinrichtungen sind dynamischen Wechsellasten, insbesondere durch sich ändernde Windverhältnisse, ausgesetzt, wobei ein erhöhter Verschleiß der beanspruchten Teile die Folge ist. Insbesondere die Verzahnungen der Getriebe werden überdurchschnittlich belastet. Dadurch kann es zu Änderungen im Zahnspiel der einzelnen Verzahnungseingriffe kommen, wodurch sich die Elastizität der Getriebe ändert.

In US 20140377069 A1 wird eine Pitch-Lageranordnung mit einem Verstärkungselement offenbart, um die Steifigkeit der Lagerpfanne des Pitch-Lagers zu verbessern. Dazu wird oberhalb des Innenrings ein Versteifungsring montiert. Ähnliche Lösungen werden in US 20150003986 A1, US 20150056078 A, EP 2933476 A1, WO 2013107452 A1 und WO 2013076754 A1 offenbart.

WO 2013/071936 A1 beschreibt eine Drehverbindung für eine Windenergieanlage mit einem Lager mit einem Innenring und einem Außenring. Der Innenring oder der Außenring stehen mit einem Verstellantrieb in Wirkverbindung. Zwischen einem ersten Lagerring und einem ersten Zahnkranzsegment ist ein Distanzringsegment angeordnet. Das Distanzringsegment weist beidseitig eine Zahnfläche auf, so dass in der Verbindung zwischen dem ersten Lagerring und dem ersten Zahnkranzsegment zwei Verzahnungsschnittstellen vorgesehen sind. Das Distanzringsegment verringert den Innendurchmesser des Lagerrings.

In WO 2013/076754 A1 wird eine Drehverbindung für eine Windenergieanlage mit einem Lager mit einem Innenring und einem Außenring offenbart. Eine Ringplatte grenzt als separates Teil an die radiale Innenwand des inneren Lagerringes an und ist dort befestigt.

DE 4308914 A1 beschreibt ein Planetenuntersetzungsgetriebe, das ein zylindrisches im Wesentlichen schalenförmiges innenverzahntes Rad hat, das an einem Ende geschlossen und an dem anderen offen ist. Das innenverzahnte Rad ist aus Blech durch einen Drehwalzprozess auf einer zahnradförmigen Dornform hergestellt.

In US 2015/003986 A1 wird eine Pitchlageranordnung für eine Windkraftanlage mit einem Außenring und einem Innenring offenbart, wobei der Innenring relativ zu dem Außenring drehbar ist und der Innenring eine Verzahnung aufweist. Ein Umfangsflansch erstreckt sich um den Innenumfang des Innenrings oberhalb der Verzahnung.

### Darstellung der Erfindung

Aufgabe der Erfindung ist es, den Herstellungsaufwand für eine Drehverbindung zu senken und eine Versteifung der Drehverbindung zu ermöglichen.

Gelöst wird die Aufgabe durch die Merkmale des Hauptanspruchs. Ausgestaltungen werden in den Unteransprüchen offenbart.

Wesentlich an der erfindungsgemäßen Lösung ist, dass der Innenring oder der Außenring einer Drehverbindung (Lager) vor dem Fräsen der Zähne nicht komplett ausgedreht wird. Das Material oberhalb der Zähne bleibt als umlaufender Restmaterialkranz vollständig im Rohling des Innenrings oder des Außenrings erhalten. Die einzelnen Zähne werden durch das Fräswerkzeug nur so weit ausgefräst, bis die erforderliche Zahnhöhe erreicht ist. Das Restmaterial über den Zähnen bleibt umlaufend vollständig erhalten. Es verstärkt und versteift den Innenring oder den Außenring der Drehverbindung. Erfindungsgemäß werden dadurch die einzelnen Zähne nicht nur im Zahnfuss am Innenring oder am Außenring gehalten. Sie werden stirnseitig ebenfalls durch das Restmaterial über den Zähnen am Übergang in das Vollmaterial des Innenrings oder des Außenrings stabilisiert. Zwischen zwei benachbarten Zähnen ist ein Zahnzwischenraum mit jeweils einem bogenförmigen Abschluss in der Art angeordnet, dass eine definierte Zahnhöhe h gewährleistet ist. Der umlaufende Restmaterialkranz stabilisiert sowohl die Verzahnung als auch den Innenring oder den Außenring.

Die Zähne der Verzahnung weisen erfindungsgemäß eine definierte Zahnhöhe h auf, welche von einer unteren Stirnfläche des Innenrings oder des Außenrings beginnend eingebracht sind. Die Verzahnung hat zwischen den Zähnen eine Anzahl von bogenförmigen Zahnzwischenräumen, wobei ein Abschluss der bogenförmigen Zahnzwischenräume in Richtung einer oberen Stirnfläche des Innenring oder des Außenrings weist. Der umlaufende Restmaterialkranz verbleibt so zwischen der oberen Stirnfläche und den bogenförmigen Zwischenräumen am Innenring oder am Außenring.

Ebenso wird die Aufgabe gelöst durch eine Verzahnung für eine Drehverbindung, bei der zwischen zwei benachbarten Zähnen, welche in ein Vollmaterial durch Fräsen eingebracht sind, ein Zahnzwischenraum mit jeweils einem bogenförmigen Abschluss in der Art angeordnet ist, dass eine definierte Zahnhöhe h gewährleistet ist, und oberhalb des bogenförmigen Abschlusses des Zahnzwischenraums ein umlaufender Restmaterialkranz angeordnet ist.

Nach einer Ausführungsform haben die einzelnen Zähne entlang der definierten Zahnhöhe h eine übliche Zahngeometrie für eine Evolventen-Verzahnung. Der bogenförmige Abschluss des Zahnzwischenraums zwischen den einzelnen Zähnen hat eine definierte Breite b.

Nach einer Ausführungsform ist der bogenförmige Abschluss des Zahnzwischenraums spitzbogenförmig oder rundbogenförmig, bevorzugt spitzbogenförmig.

### Ausführung der Erfindung

Die Erfindung wird anhand von Zeichnungen näher erläutert. Hierzu zeigen
Figur 1 eine schematische Darstellung einer Windenergieanlage,
Figur 2 eine perspektivische Darstellung des Standes der Technik,
Figur 3 eine perspektivische Teil-Darstellung eines Außenrings und eines Innenrings am Ausführungsbeispiel eines Pitchlagers,
Figur 4 eine perspektivische Teil-Darstellung des Außenrings und des Innenrings mit einem Ausschnitt am Ausführungsbeispiel eines Pitchlagers,
Figur 5 ein Schnitt durch den Außenring und den Innenring am Ausführungsbeispiel eines Pitchlagers und
Figur 6 eine schematische Darstellung des Innenrings mit Sicht auf die Verzahnung in einem Ausschnitt am Ausführungsbeispiel eines Pitchlagers,
Figur 7 eine Darstellung eines Azimutsystems.

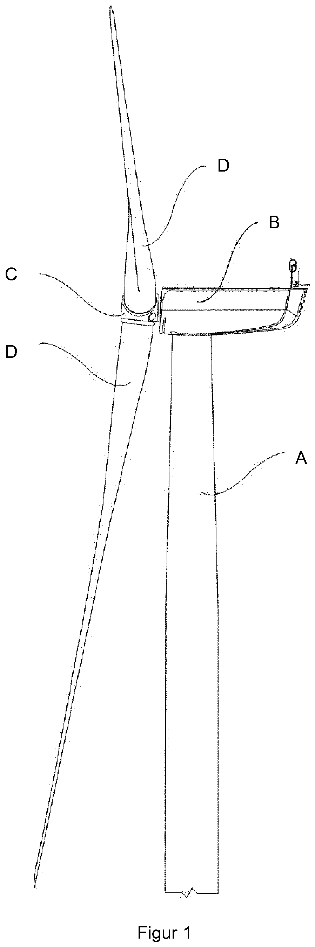

Soweit nichts anderes bestimmt, bezeichnen in den Figuren gleiche Bezugszeichen gleiche Gegenstände. Figur 1 zeigt eine schematische Darstellung einer Windenergieanlage, welche aus einem Turm A und einer drehbar auf dem Turmkopf gelagerten Gondel B, welche ihrerseits einen Triebstrang (nicht dargestellt) lagert. Der Triebstrang weist eine Rotornabe C auf, die mit beispielsweise drei Rotorblättern D verbunden ist. In Windenergieanlagen werden zum Drehen dieser unterschiedlichen Komponenten unterschiedliche Verstelleinrichtungen eingesetzt. Diese Verstelleinrichtungen weisen in der Regel Drehverbindungen (Lager) mit einem Innenring und einem Außenring auf.

Die Erfindung wird anhand eines ersten Ausführungsbeispiels in Form eines Pitchlagers näher erläutert.

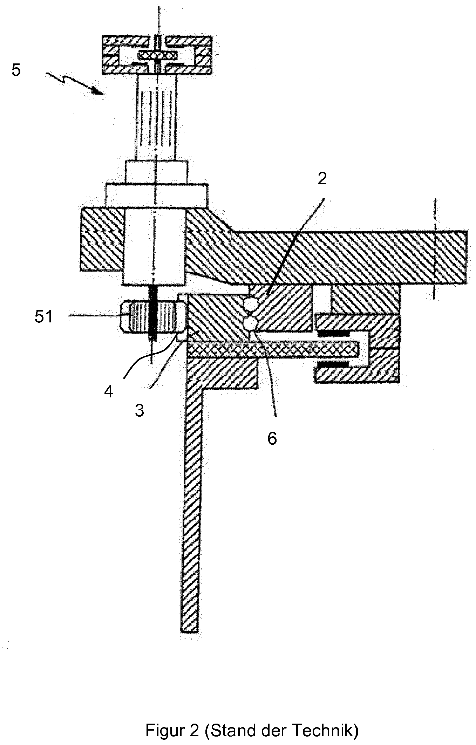

Figur 2 zeigt eine perspektivische Darstellung des Standes der Technik für ein Pitchlager 1. Das Pitchlager 1 besteht aus einem Außenring 2 und einem Innenring 3. Der Außenring 2 und der Innenring 3 sind gegeneinander beweglich gelagert. Der Innenring 3 ist fest mit dem hier nicht gezeigten Rotorblatt D verbunden. Der Außenring 2 ist mit einer hier nicht gezeigten Rotornabe C fest verbunden. Der Innenring 3 ist mit einer Verzahnung 4 versehen, in welche das Ritzel 51 des Verstellantriebs 5 eingreift. Die einzelnen Zähne der Verzahnung 4 des Innenrings 3 sind vollständig aus dem Material des Innenrings 3 herausgearbeitet.

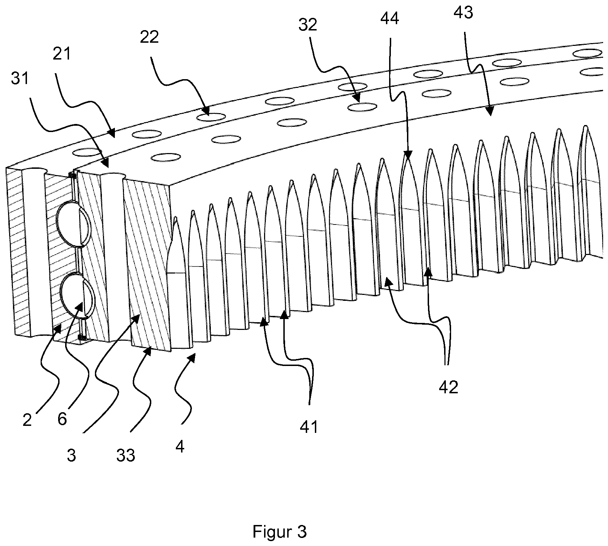

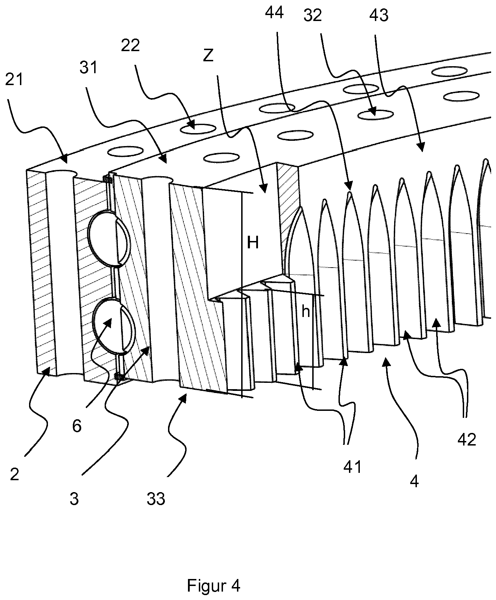

Die Figuren 3 und 4 zeigen eine perspektivische Teil-Darstellung eines erfindungsgemäßen Pitchlagers 1 mit einem Außenring 2 und einem Innenring 3. In Figur 4 ist zur besseren Veranschaulichung der Innenring 3 mit einem Ausschnitt Z versehen. Der Innenring 3 hat eine Gesamthöhe H. Auf der oberen Stirnfläche 31 sind Bohrungen 32 eingebracht. Durch diese Bohrungen 32 wird die Verbindung mit dem Rotorblatt hergestellt. Die Bohrungen 22 auf der oberen Stirnfläche 21 des Außenrings 2 dienen der Befestigung an der Rotornabe. Der Innenring 3 ist mit einer Verzahnung 4 versehen, welche von der unteren Stirnfläche 33 des Innenrings 3 beginnend in die Innenseite des Innenrings 3 eingebracht ist. Die Verzahnung 4 ist beispielsweise eine Evolventen-Verzahnung und hat für ein optimales Eingreifen des Ritzels 51 des Verstellantriebs 5 in die Verzahnung 4 eine definierte Zahnhöhe h. Die Geometrie der einzelnen Zähne 41 auf der gesamten Zahnhöhe h entspricht der üblichen Zahngeometrie für die jeweilige Anwendung. Die Ausarbeitung der einzelnen Zähne 41 erfolgt beispielsweise durch Fräsen. Der Zahnzwischenraum 42 zwischen den Zähnen 41 hat für die definierte Zahnhöhe h der Verzahnung 4 eine definierte Breite b. Die Breite b des Zahnzwischenraums 42 vermindert sich oberhalb der definierten Zahnhöhe h, so dass der Zahnzwischenraum 42 bogenförmig, insbesondere spitzbogenförmig in Richtung obere Stirnfläche 31 des Innenrings 3 verläuft und einen punktförmigen oder rundbogenförmigen Abschluss 44 auf der Innenseite des Innenrings 3 bildet. Durch diese konstruktive Anordnung der Zahnzwischenräume 42 verbreitern sich die Zähne 41 oberhalb der Zahnhöhe h und gehen in einen Restmaterialkranz 43 über, welcher sich bis zur oberen Stirnfläche 31 des Innenrings 3 erstreckt. Durch den bogenförmigen Zahnzwischenraum 42 und den verbliebenen Restmaterialkranz 43 wird der Innenring 3 sehr stabil.

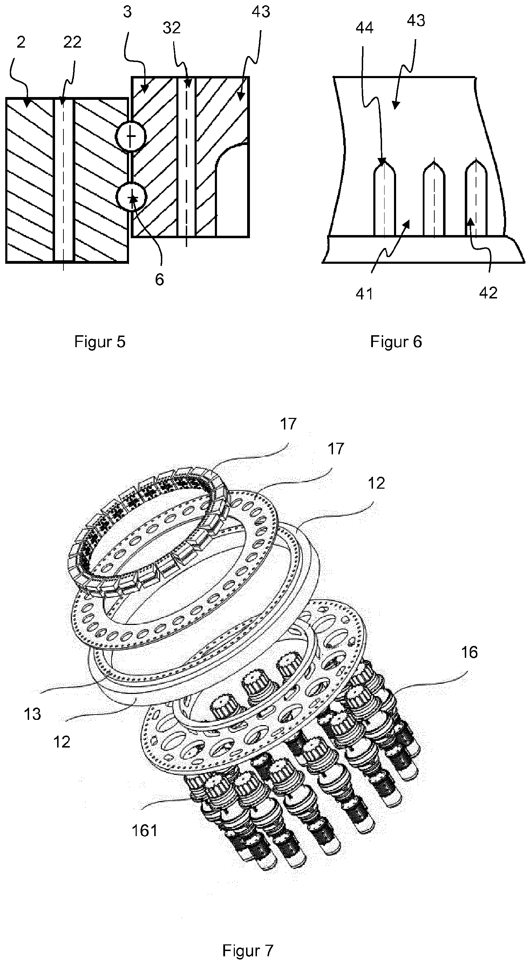

Figur 5 und 6 zeigen eine weitere Ausführungsform der erfindungsgemäßen Verzahnung 4.

In Figur 5 wird ein Schnitt durch den Außenring 2 und den Innenring 3 gezeigt. Zu sehen ist der Außenring 2 mit einer Bohrung 22 und der Innenring 3 mit einer Bohrung 32, das Lager 6 zwischen dem Außenring 2 und dem Innenring 3, sowie ein Beispiel für die Geometrie der Verzahnung 4 im Innenring 3. Es ist möglich, dass die Zahnzwischenräume 42 auch mit einem anderen Winkel, als dem hier gezeigten, enden. Erfindungswesentlich ist, dass die Zahnzwischenräume 42 bogenförmig enden, da hierdurch eine größere Stabilität erreicht wird.

Figur 6 stellt eine schematische Darstellung des Innenrings 3 eines Pitchlagers mit Sicht auf die Verzahnung 4 in einem Ausschnitt dar.

Ein weiteres Ausführungsbeispiel wird anhand eines Azimutsystems zum Drehen der Gondel B erläutert. Hierzu zeigt Figur 7 eine Darstellung einer Azimutdrehverbindung 11 mit einem Außenring 12 und einem Innenring 13. Weiterhin sind ein oder mehrere Azimutantriebe 16 und optional eine Azimutbremseinrichtung 17 angeordnet. Die Azimutantriebe 16 können, wie hier gezeigt, hängend in den Turm A eingebaut sein, so dass die Azimutdrehverbindung 11 unterhalb der Gondel B im Turm A angeordnet ist. Die Azimutantriebe 16 wirken mit einer Verzahnung 14 zusammen. In diesem Beispiel greifen die Azimutantriebe 16 greifen mit einem Ritzel 161 in die Innenverzahnung 14a des Innenrings 13 ein. Diese Innenverzahnung 14a ist entsprechend der erfindungsgemäßen Verzahnung 4 des Pitchlagers 1 aufgebaut und muss daher nicht genauer erläutert werden.

Eine weitere wichtige Ausführungsform besteht darin, dass die Azimutantriebe 16 stehend in die Gondel B hineinragen. Der Außenring 12 der Azimutdrehverbindung 11 ist hierbei fest mit der Gondel B und der Innenring 13 der Azimutdrehverbindung 11 ist fest mit dem Turm A verbunden. Dabei ist es möglich, dass die Azimutantriebe 16 sowohl in die Innenverzahnung 14a des Innenrings 13 als auch in eine Außenverzahnung 14b des Außenrings 12 eingreifen. Bei einer Anordnung der Azimutantriebe 16 mit einem Eingriff in die Außenverzahnung 14b des Außenrings 12 ist diese Außenverzahnung 14b ebenfalls entsprechend der erfindungsgemäßen Verzahnung 4 des Pitchlagers 1 aufgebaut und muss daher nicht genauer erläutert werden.

Da es sich bei den vorhergehenden, detailliert beschriebenen Drehverbindungen einer Windenergieanlage um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Verzahnung 4, 14 für eine derartige Drehverbindung in anderer Form als in der hier beschriebenen folgen, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- A: Turm einer Windenergieanlage
- B: Gondel
- C: Rotornabe
- D: Rotorblätter
- H: Gesamthöhe des Innenrings 3 oder des Außenrings 2
- h: Zahnhöhe
- b: Breite des Zahnzwischenraums 42
- Z: Ausschnitt am Innenring 3

- 1: Pitchlager
- 2: Außenring
21 obere Stirnfläche des Außenrings 2
22 Bohrungen
23 untere Stirnfläche des Außenrings 2
- 3: Innenring
31 obere Stirnfläche des Innenrings 3
32 Bohrungen
33 untere Stirnfläche des Innenrings 3
- 4: Verzahnung
41 Zähne
42 Zahnzwischenraum
43 Restmaterialkranz
44 Abschluss des Zahnzwischenraums 42
- 5: Verstellantrieb
51 Ritzel des Verstellantriebs 5
- 6: Lager

- 11: Azimutdrehverbindung
- 12: Außenring
- 13: Innenring
- 14: Verzahnung
- 14a: Innenverzahnung des Innenrings 13
- 14b: Außenverzahnung des Außenrings 12

- 16: Azimutantriebe
161 Ritzel der Azimutantriebe 16
- 17: Azimutbremseinrichtung

## Patentansprüche

1. Drehverbindung einer Windenergieanlage, bestehend aus einem Lager (6) mit einem Innenring (3; 13) und einem Außenring (2; 12), welche aus einem Vollmaterial gefertigt sind, wobei der Innenring (3; 13) oder der Außenring (2; 12) über eine Verzahnung (4; 14) mit einem Verstellantrieb (5) in Wirkverbindung steht, die Verzahnung (4; 14) eine Anzahl von, in das Vollmaterial eingebrachten Zähnen (41) aufweist, **dadurch gekennzeichnet, dass** zwischen zwei benachbarten Zähnen (41) ein Zahnzwischenraum (42) mit jeweils einem bogenförmigen Abschluss (44) in der Art angeordnet ist, dass eine definierte Zahnhöhe (h) gewährleistet ist, und oberhalb des bogenförmigen Abschlusses (44) des Zahnzwischenraums (42) ein umlaufender Restmaterialkranz (43) angeordnet ist, welcher sowohl die Verzahnung (4; 14) als auch den Innenring (3; 13) oder den Außenring (2; 12) stabilisiert.

2. Drehverbindung nach Anspruch 1 **dadurch gekennzeichnet, dass**
die Zähne (41) der Verzahnung (4; 14) eine definierte Zahnhöhe (h) aufweisen, welche von einer unteren Stirnfläche (33) des Innenrings (3; 13) oder einer unteren Stirnfläche (23) des Außenrings (2; 12) beginnend eingebracht sind, und die Verzahnung (4; 14) zwischen den Zähnen (41) eine Anzahl von bogenförmigen Zahnzwischenräumen (42) aufweist, wobei ein Abschluss (44) der bogenförmigen Zahnzwischenräume (42) in Richtung einer oberen Stirnfläche (31) des Innenrings (3; 13) oder einer oberen Stirnfläche (21) des Außenrings (2; 12) weist und der umlaufende Restmaterialkranz (43) zwischen der oberen Stirnfläche (31; 21) und den bogenförmigen Zwischenräumen (42) am Innenring (3; 13) oder am Außenring (2; 12) verbleibt.

3. Verzahnung für eine Drehverbindung, welche in ein Vollmaterial durch Fräsen eingebracht ist, **dadurch gekennzeichnet, dass**
zwischen zwei benachbarten Zähnen (41) ein Zahnzwischenraum (42) mit jeweils einem bogenförmigen Abschluss (44) in der Art angeordnet ist, dass eine definierte Zahnhöhe (h) gewährleistet ist, und oberhalb des bogenförmigen Abschlusses (44) des Zahnzwischenraums (42) ein umlaufender Restmaterialkranz (43) angeordnet ist.

4. Verzahnung nach Anspruch 3 **dadurch gekennzeichnet, dass**
die einzelnen Zähne (41) entlang der definierten Zahnhöhe (h) eine übliche Zahngeometrie für eine Evolventen-Verzahnung aufweisen.

5. Verzahnung nach Anspruch 3 **dadurch gekennzeichnet, dass**
der Zahnzwischenraum (42) zwischen den einzelnen Zähnen (41) eine definierte Breite (b) aufweist.

6. Verzahnung nach Anspruch 3 **dadurch gekennzeichnet, dass**
der bogenförmige Abschluss (44) des Zahnzwischenraums (42) spitzbogenförmig oder rundbogenförmig ist.

7. Verzahnung nach Anspruch 6 **dadurch gekennzeichnet, dass**
der bogenförmige Abschluss (44) des Zahnzwischenraums (42) bevorzugt spitzbogenförmig ist.

## Claims

1. Rotary connection of a wind turbine, consisting of a bearing (6) with an inner ring (3; 13) and an outer ring (2; 12) which are manufactured from a solid material, the inner ring (3; 13) or the outer ring (2; 12) being operatively connected via a toothing (4; 14) to an adjusting drive (5), the toothing (4, 14) having a number of teeth (41) which are made in the solid material, **characterized in that** a tooth space (42) in each case with an arcuate termination (44) is arranged between two adjacent teeth (41) in such a way that a defined tooth height (h) is ensured, and a circumferential residual material rim (43) is arranged above the arcuate termination (44) of the tooth space (42), which residual material rim (43) stabilizes both the toothing (4; 14) and the inner ring (3; 13) or the outer ring (2; 12).

2. Rotary connection according to Claim 1, **characterized in that** the teeth (41) of the toothing (4; 14) have a defined tooth height (h), which teeth (41) are made starting from a lower end face (33) of the inner ring (3; 13) or a lower end face (23) of the outer ring (2; 12), and the toothing (4; 14) has a number of arcuate tooth spaces (42) between the teeth (41), a termination (44) of the arcuate tooth spaces (42) pointing in the direction of an upper end face (31) of the inner ring (3; 13) or an upper end face (21) of the outer ring (2; 12), and the circumferential residual material rim (43) remaining between the upper end face (31; 21) and the arcuate intermediate spaces (42) on the inner ring (3; 13) or on the outer ring (2; 12) .

3. Toothing for a rotary connection, which toothing is made in a solid material by way of milling, **characterized in that** a tooth space (42) in each case with an arcuate termination (44) is arranged between two adjacent teeth (41) in such a way that a defined tooth height (h) is ensured, and a circumferential residual material rim (43) is arranged above the arcuate termination (44) of the tooth space (42).

4. Toothing according to Claim 3, **characterized in that** the individual teeth (41) have a customary tooth geometry for an involute toothing along the defined tooth height (h).

5. Toothing according to Claim 3, **characterized in that** the tooth space (42) between the individual teeth (41) has a defined width (b).

6. Toothing according to Claim 3, **characterized in that** the arcuate termination (44) of the tooth space (42) is ogival or semi-circular.

7. Toothing according to Claim 6, **characterized in that** the arcuate termination (44) of the tooth space (42) is preferably ogival.

## Revendications

1. Liaison rotative d'une éolienne, se composant d'un palier (6) avec une bague intérieure (3; 13) et une bague extérieure (2; 12), qui sont fabriquées en un matériau massif, dans laquelle la bague intérieure (3; 13) ou la bague extérieure (2; 12) se trouve en liaison active avec un entraînement de réglage (5) au moyen d'une denture (4; 14), la denture (4; 14) présente un nombre de dents (41) taillées dans le matériau massif, **caractérisée en ce qu'**un espace inter-dentaire (42) chaque fois avec une terminaison en forme d'arc (44) est disposé entre deux dents voisines (41), de telle manière qu'une hauteur de dent définie (h) soit garantie, et qu'une couronne de matériau résiduel périphérique (43) soit disposée au-dessus de la terminaison en forme d'arc (44) de l'espace inter-dentaire (42), laquelle stabilise aussi bien la denture (4; 14) que la bague intérieure (3; 13) ou la bague extérieure (2; 12).

2. Liaison rotative selon la revendication 1, **caractérisée en ce que** les dents (41) de la denture (4; 14) présentent une hauteur de dent définie (h), qui sont taillées en commençant à partir d'une face frontale inférieure (33) de la bague intérieure (3; 13) ou d'une face frontale inférieure (23) de la bague extérieure (2; 12), et la denture (4; 14) présente entre les dents (41) un nombre d'espaces inter-dentaires en forme d'arc (42), dans laquelle une terminaison (44) des espaces inter-dentaires en forme d'arc (42) pointe en direction d'une face frontale supérieure (31) de la bague intérieure (3; 13) ou d'une face frontale supérieure (21) de la bague extérieure (2; 12) et la couronne de matériau résiduel périphérique (43) subsiste entre la face frontale supérieure (31; 21) et les espaces inter-dentaires en forme d'arc (42) sur la bague intérieure (3; 13) ou sur la bague extérieure (2; 12).

3. Denture pour une liaison rotative, qui est taillée dans un matériau massif par fraisage, **caractérisée en ce qu'**un espace inter-dentaire (42) avec chaque fois une terminaison en forme d'arc (44) est disposé entre deux dents voisines (41), de telle manière qu'une hauteur de dent définie (h) soit garantie, et qu'une couronne de matériau résiduel périphérique (43) soit disposée au-dessus de la terminaison en forme d'arc (44) de l'espace inter-dentaire (42).

4. Denture selon la revendication 3, **caractérisée en ce que** les dents individuelles (41) présentent le long de la hauteur de dent définie (h) une géométrie de dent usuelle pour une denture à développante.

5. Denture selon la revendication 3, **caractérisée en ce que** l'espace inter-dentaire (42) présente entre les dents individuelles (41) une largeur définie (b).

6. Denture selon la revendication 3, **caractérisée en ce que** la terminaison en forme d'arc (44) de l'espace inter-dentaire (42) est en forme d'ogive ou en forme d'arc en plein cintre.

7. Denture selon la revendication 6, **caractérisée en ce que** la terminaison en forme d'arc (44) de l'espace inter-dentaire (42) est de préférence en forme d'ogive.
